# EUROPEAN PATENT APPLICATION

(11) **EP 4 212 603 A1**
(43) Date of publication of application: **19.07.2023**
(21) Application number: 22000028.5
(22) Date of filing: 10.02.2022
(51) Int. Cl.: C10G 1/00, C10B 53/00

(54) **PROCESS AND DEVICE FOR CONVERTING ORGANIC WASTE TO INDUSTRIAL GASES OF CONTROLLED QUALITY**

(71) Applicant: BRK Technologies s.r.o., 130 00 Praha 3 (CZ)
(72) Inventor: Rustamov, Denis, 130 00 Praha 3 (CZ)
(74) Representative: Danek, Vilém

(57) **Abstract**

An advantage of the invention is the conversion of organic waste to industrial gases of controlled quality, without limitations imposed by the corrosive and toxic nature of the primary gas. There is no requirement for shredding the input materials. The invention allows the processing of wet materials with water content up to 50%. The invention provides an alternative clean source of hydrogen with the negative cost of production under conditions of paid waste recycling service. The disclosed process is low- or no-emission.

## Description

### Technical Field

The present invention relates to a process of converting organic waste to industrial gases of controlled quality, including pure hydrogen, desalted synthetic oil, and technical powders. The invention employs process gas chromatography, predictive analytics, artificial neural network, and preparative gas chromatography for industrial-scale gas separation. The invention relates to the waste-to-products and waste-to-energy fields. The present invention also relates to a device for converting organic waste to industrial gases of controlled quality.

### Background Art

The management of solid and liquid organic waste, such as unrecyclable industrial, agricultural, residential, medical, pharmaceutical wastes, sewage sludges, oil spill sludges, remains a challenging issue. The worldwide capacities for storing these types of wastes for natural degradation are limited by ever-decreasing landfilling options, transportation unfeasibility, handling risk assessment, toxic or biological threats to the environment. The conversion of these types of waste into valuable products of distinct quality appears to be in demand.

Thermal processing has been an established technology for breaking down the chemical bonds of organic materials with processes ranging from incineration to pyrolysis, thermolysis, and gasification, implemented in a number of engineering solutions. Meanwhile, no complex solution is available on the market, that would allow the conversion of organic materials into gas products of distinct quality. The gaseous products generated by the existing incineration, pyrolysis, thermolysis, or gasification technologies are to be classified as either direct gaseous emissions or as a gas mixture of very unstable quality, which prevents produced gas from being used in any practical application. These gaseous mixtures, known as pyrolysis gas or syngas, vary dramatically in composition depending on the properties of the input waste, the type of process used, temperature curve, homogeneity of heat transfer, cavities in the reactor zone, and many other factors. Due to their unstable nature, these mixtures may not be directly used for power generation. They are highly corrosive to destroy any existing combustion engine or turbine. Their methane number fluctuates in a wide range causing the combustion engine to knock and rapidly fail. The Wobbe index also changes widely which prevents the smooth run of any existing gas burner. Even if existed a device that proved corrosion and knocking resistance adequate to the described gas mixture, the irregular gas input, would leave no room for meeting emission standards.

Homogenization of pyrolysis gas by simple accumulation faces another set of challenges. Unpressurized or slightly pressurized storage would require large gas storage tanks, like the membrane type commonly used for biogas. Unlike biogas, pyrolysis gas contains high concentrations of hydrogen, which easily permeates through the membrane of the tank, decreasing the tank's efficiency, causing the membrane storage to lose valuable high energy gas components to the atmosphere, and creating explosion safety concerns outside the tank membrane. Directly compressing the pyrolysis gas for storage is not practical due to corrosion resistance concerns, as well as unwanted condensate generation and compressor clogging.

The typical pyrolysis system currently available on the market comprises the following: the reactor, where the thermal decomposition takes place, the condensing heat exchanger, the basic gas treatment system if is used, and, finally, the system of storage and distribution of pyrolysis products. Those products fall into three categories: solids, liquids, and gas.

Pyrolysis vapour is very corrosive. The gaseous products of thermal decomposition of organic matter may include but are not limited to H2S, CO2, HCl, HF. In addition to that pyrolysis gas contains large amounts of hydrogen. The molar concentration of hydrogen may get as high as 60%, depending on the process temperature, input material blend, and several other parameters.

What is mostly ignored in the design of current pyrolysis systems, is that hydrogen itself has a very specific corrosive impact on the components of the system. The major threats are hydrogen-induced cracking (HIC), hydrogen embrittlement, and hydrogen attack.

The mentioned types of corrosion do not receive an adequate response from pyrolysis systems that are currently available on the market.

The pyrolysis reactor and the primary heat exchanges are the most vulnerable components.

In spite of the significant corrosion impact, an adequate engineering strategy in designing the system should be adopted, with the following minimum considerations:
- all materials in contact with the corrosive vapour should be resistant to the mentioned types of corrosion, which means no carbon steel, no rubber, or silicone gaskets be allowed;
- all unfavourable gaseous products should be isolated and removed from the process at the earliest possible stages;
- redundancy, or replication of critical systems, should be considered, where all components with high corrosion load should be cheap and easily replaceable without interrupting the manufacturing process;
- gaseous products of pyrolysis should be monitored with the appropriate process analytical instruments;
- the pyrolysis plant must contain an advanced gas treatment system capable of switching between dedicated modules depending on actual gas composition, in order to enable appropriate sequences of reactions and efficient gas scrubbing.

The gaseous product of pyrolysis must be continuously monitored. There is no universal gas treatment system. Different gas compositions call for different technological responses. One sorbent can be efficient against one undesired component but can be poisoned by the other. The sequence of gas treatment steps should also be adaptable.

In order to correctly switch between gas treatment modules, one needs to employ process analytical instruments, similar to the ones that are used by the traditional oil and gas industry, with the only exception that those instruments should allow for more wide measurement ranges as pyrolysis gas tends to largely change its composition during different process stages.

The challenges of process gas analytics in controlling the pyrolysis process should also be mentioned.

Pyrolysis gas has a complex and unstable structure, especially at midrange temperatures (350 - 500°C).

The existing pyrolysis, thermolysis, and even plasma gasification reactors may not guarantee the absence of cavities and low-temperature zones. In practice, it means that during thermal processing at declared maximum temperatures heavier-than-expected gaseous components may leave the reactor. For that purpose secondary reactor chambers are used, where gaseous products undergo further heating to reach the target temperature for effective C-C and C-X bond fission. Meanwhile, the use of secondary heating chambers wouldn't solve secondary free radical recombinations unless special conditions were created.

These conditions are part of the disclosed invention. Free radicals of C-C and C-X bond fission are continuously sucked from the reactor and abruptly cooled. The thin atmosphere inside the reactor and pipeline ensures a minimum probability of collisions between radicals while abrupt cooling ensures that the energy stays below the level required for the recombination.

Pyrolysis gas may contain a number of components that are difficult to detect and measure with the required accuracy. One way to deal with this problem is to keep adding new analytical instruments or modules to the process analytical system, which logically faces budget limitations.

Hence, there is a need for a predictive analytical device, which allows evaluating technological risks of thermal processing of organic substances to direct, with due expertise, the intermediary gaseous stream through the appropriate sequence of scrubbers and separation columns.

A need exists for the technology allowing thermal recombination of organic waste without limitations imposed by the challenges described above, wherein gaseous products would be first separated, and then blended in the controllable process, and the final products of blending be analytically verified.

The method shall comprise following steps:
a. qualitative and quantitative elemental analysis of waste materials, and acquisition of data about the materials,
b. creating the predictive model by processing the readings from physical analytical instruments and known data about the materials with the artificial neural network-based device which converts limited information about the material into extended prognosis which includes output prediction for more components than were originally monitored by physical instruments. The input layer of the artificial neural network is formed by the input elemental analysis data, and data extracted from the material safety data sheets, with preliminary dataset converted to an empirical formula of the batch, wherein backpropagation algorithm is based on real process gas chromatographic measurements used as a calibration set, combined with chemical predictive modeling based on known chemical reactions under registered conditions.

### Summary of the Invention

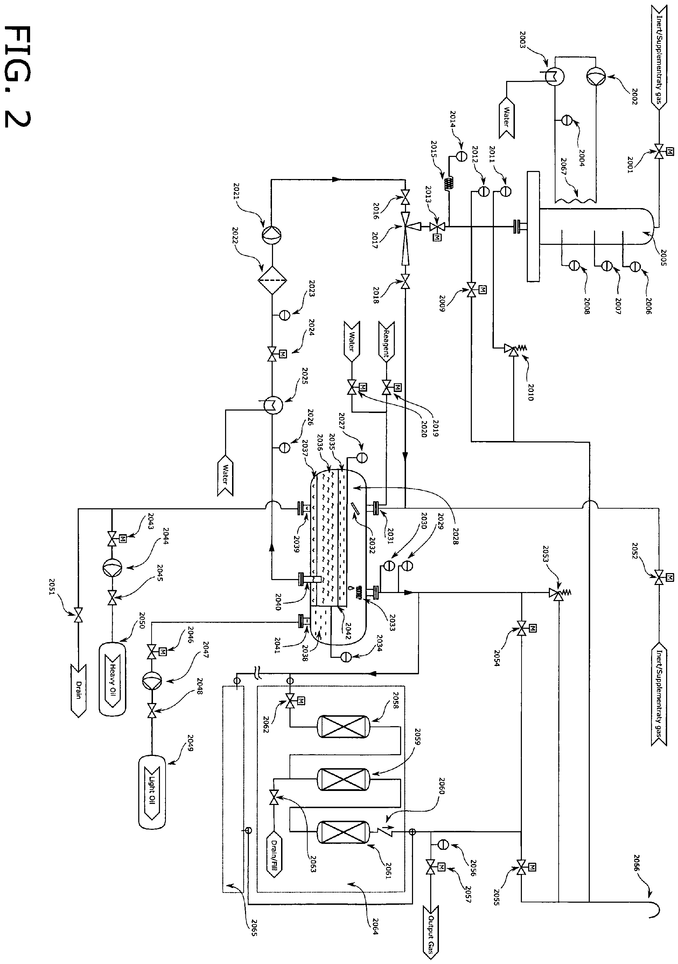

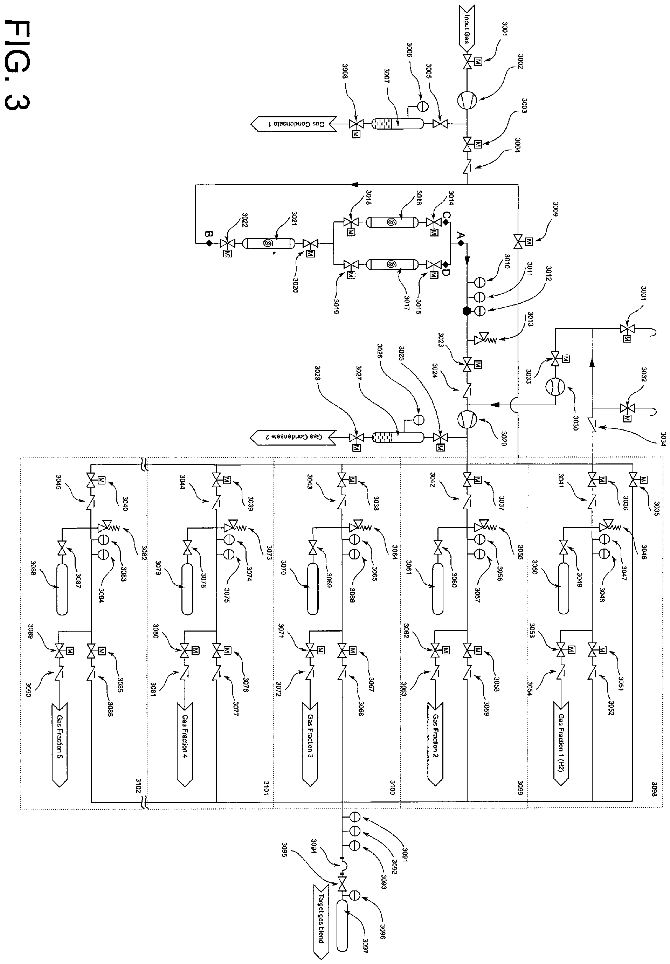

A device for converting organic waste to industrial gases of controlled quality comprises:
1. Input material analysis system with an artificial neural network which processes readings from physical analytical instruments aiming to convert limited information about the material into extended prognosis which includes output prediction for more components than were originally monitored by physical instruments. The aim of this prognosis is to get practical recommendations for batch preparation for further thermal processing of various types of organic materials that can be blended to exploit mutual neutralization of the unwanted components of the output gas mixture. The input material analysis system comprising:
   1.1. physical analytical instruments for determining the elemental composition of the solid input materials,
   1.2. process gas chromatograph and online gas analyzers for monitoring gaseous products of the thermal processing,
   1.3. the device for processing the integrated data from the physical instruments,
   1.4. the artificial neural network for recreating the missing or blurred analytical data, and filling absent, but essential for technological control, attributes of the output products, based on the observable data acquired from the physical analytical instruments. The artificial neural network predicts mass fractions of the output products and assigns expected values to the hard-to-detect but likely components based on the chemical probability by using the algorithm of reinforced machine learning.
   1.5. laboratory gas chromatograph with mass-spectrometer for output products analysis and providing calibration set for the artificial neural network for reinforced machine learning and the prediction improvement.
2. Thermal recombination, gas cooling, scrubbing, and liquid separation module (Fig. 2) comprising essentially:
   2.1 bell-type induction heated reactor (2005) for batch processing of waste organic materials, with loading from below to ensure gas tightness of the system.
   2.2 Venturi type ejector (2017) with liquid motive fluid for primary gas suction from the reactor (2005), and abrupt gas cooling to minimize the effect of secondary chemical reactions.
   2.3 heat-exchanger, gas-liquid separator, and desalter device (2028), wherein the primary gas is separated from the motive cooling liquid (2036), and condensed phase is desalted and gravitationally separated into heavy oils (2037) and light synthetic oils (2035, 2038).
   2.4 At least two gas scrubber chains (2064, 2065) for primary gas cleaning of corrosive and unwanted components. Each chain of scrubbers consists of at least three scrubbers: the dry scrubber (2058), the liquid medium scrubber (2059), the dryer (2061). Different scrubber chains (2064/2065) contain different sets of sorbents, and solutions, where the separate chains are switchable depending on analytical prognosis, which establishes the major unwanted components of the primary gas.
3. Preparative gas chromatography-based gas separation system, with gas blending and compressed gas storage modules (Fig. 3) consisting of essentially:
   3.1 First stage compressor (3002) for primary gas compression, during which process part of the gas ends up as condensate in the pressure vessel (3007).
   3.2 Preparative gas chromatography columns (3021, 3016, 3017) wherein the compressed gas is separated into different gases, and gas fractions by adsorption-desorption velocity gradient while passing through tree-structured series of columns (3021, 3016, 3017) in the time-dependent and analytically controlled manner.
   3.3 On-line process gas analyzer (3012) for monitoring dynamics of concentration changes of separated gas components, along with pressure transmitter (3010) and temperature transmitter (3011).
   3.4 Second stage compressor (3029) for further compression of separated gas fractions released from the chromatography columns (3021, 3016, 3017).
   3.5 A set of automatic valves (3035, 3036, 3037, 3038, 3039, 3040, 3033) and a vacuum pump (3030) for routing the gas fractions into separate pressure cylinders (3050, 3061, 3070, 3079, 3088) .
   3.6 An automatic valve system (3051, 3058, 3067, 3076, 3085), where the valve (3051) controls the flow of the first gas fraction to the target gas blend, the valve (3058) controls the flow of the second fraction, the valve (3067) controls the third fraction, the valve (3076) controls the fourth fraction, the valve (3085) controls the fifth fraction, a precision weight transmitter (3096), a precision pressure transmitter (3091), a temperature transmitter (3092), a gas chromatograph (3093) for target gas blend preparation.

The process, methods, and/or processes of the present invention relate to the analytically controlled thermo-catalytic recombination of organic materials in electromagnetic fields for producing industrial gases of controlled quality, desalted synthetic oil, and technical powders.

The first technological step is the full qualitative and quantitative elemental analysis of input waste materials aiming to disclose the empirical formula of each representative component of the batch. This step can be supplemented by material safety data sheet processing for comparative verification of the acquired data.

The empirical formula along with the weight of each component of the proposed batch is fed to the artificial neural network, where the maximum theoretical output weight for each component is compared against real process gas chromatography measurements under similar conditions. The left weights are redistributed between theoretically monitored components, after filtering, wherein cross-reactions, catalytic/inhibitor effects, and other theoretical and empirical conditions for data filtering are considered for the final probable weight output estimated for each component. In the proposed model real analytical measurements are to the artificial neural network as calibration measurements to the real analytical instrument. The process gas chromatograph uses calibration gas as a comparative standard to make more precise measurements. In the same manner, artificial neural network uses measurements from a set of analytical instruments as a comparative standard for calibration and more precise prediction. The network is trained on finding similarities in data patterns acquired from analytical instruments and process logs. The analytical instrument is to the artificial neural network as is calibration gas to the physical instrument.

The list of components monitored by process gas chromatography, that form calibration set and base for neural network backpropagation consists of, but is not limited to: Hydrogen, Methane, Water, Carbon monoxide, Nitrogen, Ethylene, Ethane, Oxygen, Hydrogen sulfide, Propadiene, Propylene, Carbon dioxide, Propane, Butenes, i-Butane, n-Butane, Pentanes+.

The list of components predicted by the model consists of, but is not limited to: Hydrogen, Methane, Ammonia, Water, Hydrogen fluoride, Acetylene, Hydrogen cyanide, Carbon monoxide, Nitrogen, Ethylene, Formaldehyde, Ethane, Oxygen, Methanol, Phosphine, Hydrogen sulfide, Propadiene, Hydrogen chloride, Propylene, Carbon dioxide, Ethylene oxide, Propane, Nitrogen dioxide, Chloromethane, Butenes, i-Butane, n-Butane, Acetic acid, Furan, Tetrafluoroethylene, Dinitrogen trioxide, Arsine, Benzene, Pyrazine, Dioxin, Diacetyl, Toluene, Phenol, Furfural, Phosgene, Tetrafluorosilane, Hydroxyacetone, Chloroform, Hexachlorobenzene, Octamethylcyclotetrasiloxane, Tetrachlorodibenzodioxin.

According to the results produced by predictive analytical modeling, the batch is rather considered ready for direct processing, with primary gas scrubbing pathway automatically suggested, or rejected for further blending with other materials, catalysis, inhibitors, and/or additives, offered by the prognostic model, in order to minimize the output of unwanted products, maximize the output of favoured products, utilize certain types of solid and liquid residue from the previous batches.

The ready for processing batch is introduced to the induction heated reactor in a capsule, wherein the capsule is inserted to the induction coil zone from below for thermo-catalytic cracking in an electromagnetic field with the frequency of kHz range, at the negative pressure, without oxygen, at temperatures between 350°C and 1000°C. The reactor is designed in the shape of the bell where all insulation components and flanges are located in the bottom part of the reactor to ensure maximum gas tightness and robustness. The temperature curve is set in accordance with the predictive analytical data. The output gaseous products are monitored by the online process gas chromatography system.

The next stage involves abrupt cooling of gaseous products below 100°C in contact gas-liquid heat exchanger with Venturi-type ejector while continuously monitoring pH and oxidation/reduction potential (ORC) of the medium solution, stripping gas of water-soluble components, introducing liquid condensate separation by density gradient, scrubbing gaseous products with solid sorbents and liquid solutions, in a sequence of scrubbers, depending on the need to strip off unwanted gas components before preparative gas chromatography separation phase.

Then follows compressing gases up to 50 bar, sending the gas mixture for separation by means of preparative gas chromatography, wherein different gases, and gas fractions are separated by adsorption-desorption velocity gradient while passing through tree-structured series of columns with sorbents, and wherein the outcoming gas stream is analytically controlled for establishing compound boundaries and intervals for switching between separate high-pressure gas storage vessels. The separated gases are further compressed for either their liquefaction, storage in high-pressure vessels up to 250 bar, or further blending of certain separated gases into the new target mixture.

The produced gases and new on-demand gas mixtures are verified by the gas chromatography method.

The solid residue is micronized and analyzed for re-use in the disclosed process as either source of carbon for further gas generation, sorbent, catalyst, inhibitor, or, in case of rejection for the disclosed process, as technical powder of distinct quality for the free industrial market.

### Brief description of the drawings

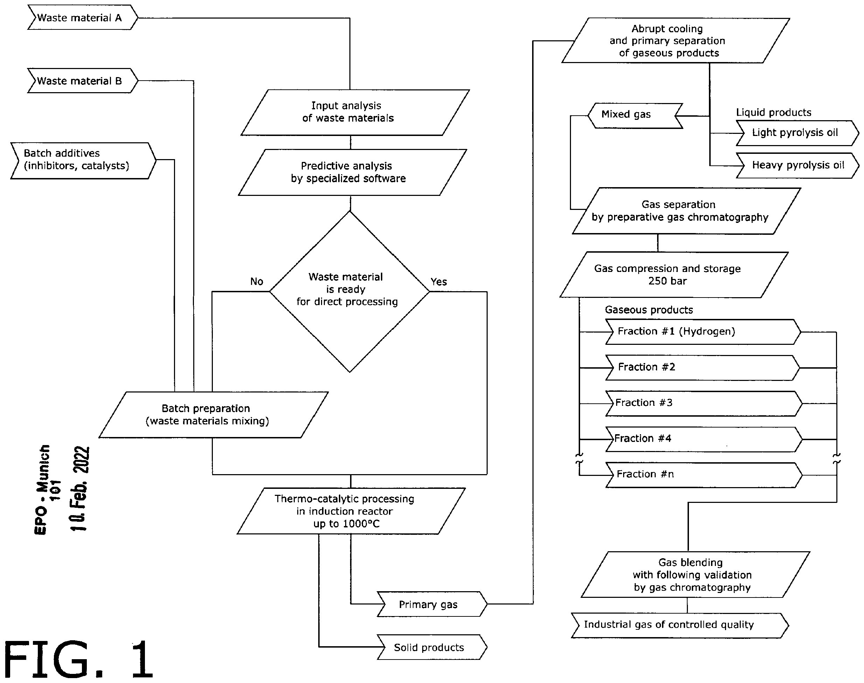

FIG. 1 is a flowchart illustrating the process of converting organic waste to industrial gases of controlled quality;
FIG. 2 is a piping and instrumentation diagram involving thermal recombination, gas cooling, scrubbing, and liquid separation;
FIG. 3 a piping and instrumentation diagram involving a preparative gas chromatography-based gas separation system, with gas blending and compressed gas storage modules.

### Example of the Preferred Embodiment

The preferred embodiment is disclosed in FIG. 2 and FIG. 3.

A device for converting organic waste to industrial gases of controlled quality, comprising:
- a device for qualitative and quantitative elemental analysis of waste materials with artificial neural network;
- induction heated reactor (2005) capable of thermal processing of organic materials up to 1000°C;
- system of contact abrupt cooling of the output gas (2017);
- heat-exchanger, gas-liquid separator, and desalter device (2028);
- scrubber chains (2064, 2065) and
- preparative gas chromatography-based gas separation system (Fig 3).

The waste material is first analyzed by the combination of methods aiming to establish the full elemental composition of the batch. The data resulting from the input material evaluation is processed by the artificial neural network, which provides the prediction for possible mass fractions of individual output components. This prognostic device gives expert advice whether the material is ready for direct processing, or not, and which chain of scrubbers for primary gas cleaning should be activated. In case of negative response, the device provides recommendations for the batch upgrading aiming to exploit mutual neutralization of the unwanted components, catalytic and inhibitory effects of non-organic components of the batch (particularly metals), and by minimizing the concentration of the unwanted components down to the acceptable levels.

The methods of batch upgrading include: blending other waste materials into the batch, using supplementary gases or liquids during the thermal processing, that would in this case be administered directly into the reactor (2005), adding catalysts or inhibitors directly to the batch. All wights for the blend and recipe variants are generated by the prognosis device.

After the recommended blend components are weighted and the batch is prepared it goes for thermal processing to the induction heated reactor (2005). Three parameters are controlled inside of the reactor during the thermal processing: pressure transmitter (2006), temperature transmitter (2007), and oxygen concentration sensor (2008). In accordance with the prognosis model, a supplementary gas may be administered into the reactor. The reactor is heated by an electromagnetic field that is induced in the water-cooled induction coil (2067). The cooling water is pumped through the coil by the pump (2002) with the temperature of the circuit maintained by the heat-exchanger (2003). The temperature in the cooling circuit is controlled by the transmitter (2004). The output gas pipeline from the reactor is equipped with the pressure transmitter (2011), temperature transmitter (2012), gas analyzer (2014), cooling coil (2015) for gas sampling, the pressure-safety valve (2010), and the motorized valve (2009) for emergency gas release from the reactor to the vent (2066).

The batch undergoes thermo-catalytic processing, resulting in primary gas generation. The solid products remain in the reactor until unloading. The primary gas is sucked from the reactor via the Venturi type ejector (2017) and abruptly cooled by the contact liquid method to minimize the energy allowed for secondary chemical reactions.

Then the primary gas goes through the heat-exchanger, gas-liquid separator, and desalter device (2028). It enters the heat-exchanger at the flange (2031) as a component of the multi-phase fluid, which includes the primary gas, its primary condensation synthetic oil products, and the motive water-based fluid. The multi-phase fluid is then blasted against the dissipator (2032), after which the gas escapes the heat-exchanger, passing through the demister (2033) to the scrubber chain (2064). The motive water-based fluid flows back to the heat exchanger (2036) and continues circulating in the loop through the Venturi-type ejector (2017). It leaves the heat exchanger through the floating throat (2040), which is set to the buoyant density of the motive water-based fluid (2036). The motive fluid is pumped from the device (2028) by the pump (2021) to the Venturi type ejector (2017), through the dedicated heat exchanger (2025), where the temperature is controlled by the transmitter (2026), and the pH/ORP of the fluid is monitored by the sensor (2023) for motive fluid adjustment by adding more reagent via the motorized valve (2019) and freshwater filling via the valve (2020). The level of the motive fluid filling and adjustment is controlled by the level transmitter (2027). The valves (2016, 2018) stand for adjusting input and output flow in- and from- the Venturi type ejector (2017). The circulating motive fluid is filtered through the filter (2022).

Two types of synthetic organic liquids are generated inside of the device (2028) that are gravitationally separated in the liquid water-based medium, leaving most of the water-soluble salts in the motive fluid (2036). One liquid (2035) is lighter than the motive fluid (2036) and, as accumulated, overflows the partition (2042). As a result of the overflow this light oil is collected in the separate part of the vessel (2038), and then, depending on the level control (2035), which automatically opens the relative valve (2046), further pumped off to the light oil storage vessel (2049) by the pump (2047). The heavy oil (2037) is pumped from the device (2028) through the valve (2043) by the pump (2044) to the vessel (2050).

The primary gas leaves the device (2028) through the valve (2062) for scrubbing and cleaning the corrosive and unwanted components. The scrubber chains (2064, 2065) are used in the process depending on the type of processed input materials and recommendations of the prognostic device. Each chain of scrubbers (2064, 2065) consists of at least three scrubbers: the dry scrubber (2058), the liquid medium scrubber (2059), the dryer (2061). Each scrubber chain (2064, 2065) contains different blends of sorbents, and solutions, where the separate chains are switchable depending on the prognosis, which establishes the major unwanted components of the primary gas. The inert gas pipeline may also be used for blending supplementary gases into the primary gas via the valve (2052) to ensure efficient further gas processing. In case of the overpressure, the safety-pressure valve (2053) releases the gas to the vent (2066). The gas may be also vented via the valves (2054, 2055) for safety or maintenance reasons. The quality of the output primary gas is monitored by the gas analyzer (2056), which is preferably a process gas chromatograph.

Next, the scrubbed gas goes to the preparative gas chromatography-based gas separation system (FIG. 3).

First, the gas is let into the system by opening the main valve (3001), then it's compressed by the first stage compressor (3002) up to 50 bar during which process part of the gas condenses forming a liquid mixture of light hydrocarbons in the pressure vessel (3002), passing through the valve (3005) and controlled by the level gauge (3006) for draining via the valve (3008) when the level is up.

After the first stage compressor, the gas is passed through the valve (3003) and the check valve (3004) to prevent the reverse flow and gets to the preparative gas chromatography columns (3021, 3016, 3017). The piping section from the junction (A) displayed on FIG. 2 to the junction (B) displayed on Fig 3 with three chromatographic columns and valves may be replicated several times with consecutive insertion into the junctions (C, D) displayed on Fig 3, building tree-shaped column structure for more gas components to be separated depending on the need.

After the valve (3022) the gas, which up to this stage appears like a mixture of primarily hydrogen, carbon monoxide, carbon dioxide, nitrogen, and various hydrocarbons, from C2 to C5, enters the preparative gas chromatography column (3021).

Then the valve (3022) gets closed. When the valve (3019) remains closed, the valve (3020) and the valve (3018) both get open allowing the already separated light gases primarily hydrogen, methane, and carbon monoxide to flow from the first column to the second column (3016), while heavier gases more readily adsorbed by the sorbents of the column remain in the column (3021). By opening the valve (3014) the gas is released from the column (3016) to the pipeline, where the pressure is controlled by the pressure transmitter (3010), the temperature is controlled by the temperature transmitter (3011), and the gas composition is continuously monitored by the on-line gas analyzer (3011) for further routing the gas streams through the system. Based on the readings from this analyzer (3011), the consequently released gases from the sorbents of the chromatography columns and gas fractions are routed via the valve (3023) and the check valve (3024) to the second stage compressor (3029). The system ensures that different gases, separated by the chromatography columns in sequential order are further compressed up to 250 bar and stored in separate pressure vessels (3050, 3061, 3070, 3079, 3088, 3097). Heavier fractions leave the column (3021) and are routed through the column (3017), while the pass-away through the parallel column (3016) is closed by the valves (3018, 3016). The heaviest fractions are removed from the columns (3021, 3016, 3017) by the vacuum pump (3030) for which procedure the valves (3014, 3015, 3003, 3035, 3036, 3037, 3038, 3039, 3040, 3031, 3033) get closed, the valves (3018, 3019, 3020, 3022, 3009, 3033) get open, the vacuum pump (3030) delivers the gases to the inlet of the second stage compressor (3029) which compresses them for further storage in the dedicated pressure vessel. The minimum number of parallel identical storage sections (3098, 3099, 3100, 3101, 3102) is considered five, based on the average gas composition and average input waste material feedstock. The output products would, in this case, include: 1) pure hydrogen, 2) fuel gas blend consisting of hydrogen, methane, carbon monoxide, 3) propane-butane fraction, 4) carbon dioxide, 5) mixed fraction, that contains the remaining components of the gas mixture, which further industrial application depends on its analysis. Meanwhile, the number of dedicated storage sections can be extended according to specific need to ensure further gas separation. For blending the target gas mixture into the pressure vessel (3097) the following sequence of steps is required. The valves (3036, 3037, 3038, 3039, 3040) get closed. The gas from each pressure storage vessel (3050, 3061, 3070, 3079, 3088) is analyzed via the sampling lines (3048, 3057, 3066, 3075, 3084) connected to the gas analyzer (preferably, gas chromatograph). The target gas composition, if it doesn't correspond directly to the user requirement specification from the gases and fraction already stored in the pressure vessels (3050, 3061, 3070, 3079, 3088) is automatically calculated based on the end-user specification, and the separate gases or fractions availability from the storage system. The target gas is prepared by either the volumetric method using precision pressure transmitter (3091) with temperature transmitter (3092) or by the gravimetric method, using high precision weight transmitter (3096) for weighing the pressure vessel with the target gas blend (3097), connected to the pipeline with the flexible hose (3094) while consequently filled with different gases and fractions of the known component structure. The verification of the target gas blend is done with the gas chromatographic measurement via the sampling port (3093), or alternative gas analysis of adequate accuracy.

### Industrial Utilization

The present invention is suitable for processing organic waste into valuable products of controlled quality. A wide range of organic materials can be processed, including non-shredded objects with a volume up to 150 L, and waste with a high moisture content of up to 50%. The artificial neural network-based device provides a predictive model and a recipe for blending the batch in order to minimize the output of unwanted products, maximize the output of favoured products, utilize certain types of solid and liquid residue from the previous batches, process the materials that otherwise be challenging to utilize or recycle. The invention can be used for the generation of fuel gas of controlled quality from alternative and renewable sources.

### List of reference marks

- 2001 -: main valve
- 2002 -: pump of the induction cooling circuit
- 2003 -: heat exchanger of the induction cooling circuit
- 2004 -: temperature transmitter
- 2005 -: induction heated reactor
- 2006 -: pressure transmitter
- 2007 -: temperature transmitter
- 2008 -: oxygen sensor
- 2009 -: motorized valve
- 2010 -: pressure-safety valve
- 2011 -: pressure transmitter
- 2012 -: temperature transmitter
- 2013 -: motorized valve
- 2014 -: gas analyzer
- 2015 -: cooling coil for gas sampling
- 2016 -: flow adjustment valve
- 2017 -: Venturi type ejector
- 2018 -: flow adjustment valve
- 2019 -: motorized valve for reagent dosing
- 2020 -: motorized valve for water filling
- 2021 -: motive fluid pump of the ejector circuit
- 2022 -: filter of the ejector circuit
- 2023 -: ph/ORP sensor of the motive fluid
- 2024 -: motorized valve of the ejector circuit
- 2025 -: heat exchanger of the ejector circuit
- 2026 -: temperature transmitter
- 2027 -: light oil level control
- 2028 -: heat-exchanger, gas-liquid separator, and desalter device
- 2029 -: pressure transmitter
- 2030 -: temperature transmitter
- 2031 -: heat exchanger inlet flange
- 2032 -: dissipator
- 2033 -: demister
- 2034 -: level control
- 2035 -: light synthetic oil
- 2036 -: water-based motive fluid
- 2037 -: heavy synthetic oil
- 2038 -: light synthetic oil
- 2039 -: heavy oil outlet
- 2040 -: floating throat of the motive fluid
- 2041 -: light synthetic oil outlet
- 2042 -: overflow partition
- 2043 -: motorized valve for heavy oil
- 2044 -: pump for heavy oil
- 2045 -: manual valve for heavy oil vessel
- 2046 -: motorized valve for light oil
- 2047 -: pump for light oil
- 2048 -: manual valve for light oil vessel
- 2049 -: light synthetic oil storage vessel
- 2050 -: heavy synthetic oil storage vessel
- 2051 -: manual drain valve
- 2052 -: motorized valve for inert or supplementary gas supply
- 2053 -: pressure-safety vale
- 2054 -: motorized valve of vent pipe
- 2055 -: motorized valve of vent pipe
- 2056 -: gas analyzer
- 2057 -: motorized valve of scrubber output gas
- 2058 -: dry scrubber
- 2059 -: liquid medium scrubber
- 2060 -: check-valve
- 2061 -: gas dryer
- 2062 -: motorized valve of scrubber chain
- 2063 -: valve for liquid scrubber medium fill and drain
- 2064 -: gas scrubber chain
- 2065 -: gas scrubber chain
- 2066 -: gas vent
- 2067 -: induction coil
- 3001 -: motorized main valve of gas separation system
- 3002 -: first stage gas compressor
- 3003 -: motorized valve
- 3004 -: check valve
- 3005 -: manual valve
- 3006 -: level control
- 3007 -: gas condensate pressure vessel
- 3008 -: motorized valve
- 3009 -: motorized valve
- 3010 -: pressure transmitter
- 3011 -: temperature transmitter
- 3012 -: on-line process gas znalyzer
- 3013 -: check valve
- 3014 -: motorized valve
- 3015 -: motorized valve
- 3016 -: preparative gas chromatographic column
- 3017 -: preparative gas chromatographic column
- 3018 -: motorized valve
- 3019 -: motorized valve
- 3020 -: motorized valve
- 3021 -: preparative gas chromatographic column
- 3022 -: motorized valve
- 3023 -: motorized valve
- 3024 -: check valve
- 3025 -: motorized valve
- 3026 -: level control
- 3027 -: gas condensate vessel
- 3028 -: motorized valve
- 3029 -: second stage gas compressor
- 3030 -: vacuum pump
- 3031 -: motorized valve
- 3032 -: motorized valve
- 3033 -: motorized valve
- 3034 -: check valve
- 3035 -: motorized valve
- 3036 -: motorized valve
- 3037 -: motorized valve
- 3038 -: motorized valve
- 3039 -: motorized valve
- 3040 -: motorized valve
- 3041 -: check valve
- 3042 -: check valve
- 3043 -: check valve
- 3044 -: check valve
- 3045 -: check valve
- 3046 -: pressure-safety valve
- 3047 -: pressure transmitter
- 3048 -: gas sampling port
- 3049 -: manual valve
- 3050 -: pressure vessel
- 3051 -: motorized valve
- 3052 -: check valve
- 3053 -: motorized valve
- 3054 -: check valve
- 3055 -: check valve
- 3056 -: pressure transmitter
- 3057 -: gas sampling port
- 3058 -: motorized valve
- 3059 -: check valve
- 3060 -: manual valve
- 3061 -: pressure vessel
- 3062 -: motorized valve
- 3063 -: check valve
- 3064 -: pressure-safety valve
- 3065 -: pressure transmitter
- 3066 -: gas sampling port
- 3067 -: motorized valve
- 3068 -: check valve
- 3069 -: manual valve
- 3070 -: pressure vessel
- 3071 -: motorized valve
- 3072 -: check valve
- 3073 -: pressure-safety valve
- 3074 -: pressure transmitter
- 3075 -: gas sampling port
- 3076 -: motorized valve
- 3077 -: check valve
- 3078 -: manual valve
- 3079 -: pressure vessel
- 3080 -: motorized valve
- 3081 -: check valve
- 3082 -: pressure-safety valve
- 3083 -: pressure transmitter
- 3084 -: gas sampling port
- 3085 -: motorized valve
- 3086 -: check valve
- 3087 -: manual valve
- 3088 -: pressure vessel
- 3089 -: motorized valve
- 3090 -: precision pressure transmitter
- 3091 -: temperature transmitter
- 3093 -: gas sampling port
- 3094 -: flexible hose
- 3095 -: manual valve
- 3096 -: precision weight transmitter
- 3097 -: pressure vessel for blended gas
- 3098 -: gas storage section for the first fraction
- 3099 -: gas storage section for the second fraction
- 3100 -: gas storage section for the third fraction
- 3101 -: gas storage section for the fourth fraction
- 3102 -: gas storage section for the fifth fraction

## Claims

1. A device for converting organic waste to industrial gases of controlled quality, comprising:
- a device for qualitative and quantitative elemental analysis of waste materials with artificial neural network;
- induction heated reactor (2005) capable of thermal processing of organic materials up to 1000°C;
- system of contact abrupt cooling of the output gas (2017);
- heat-exchanger, gas-liquid separator, and desalter device (2028);
- scrubber chains (2064, 2065) and
- preparative gas chromatography-based gas separation system.

2. A process of analytically controlled thermo-catalytic recombination of organic materials in electromagnetic fields for producing industrial gases of controlled quality, including pure hydrogen, desalted synthetic oil, and technical powders; the process comprising:
a. qualitative and quantitative elemental analysis of waste materials, and acquisition of data about the materials,
b. creating the predictive model by processing the readings from physical analytical instruments and known data about the materials with the artificial neural network-based device which converts limited information about the material into extended prognosis which includes output prediction for more components than were originally monitored by physical instruments. The input layer of the artificial neural network is formed by the input elemental analysis data, and data extracted from the material safety data sheets, with preliminary dataset converted to an empirical formula of the batch, wherein backpropagation algorithm is based on real process gas chromatographic measurements used as a calibration set, combined with chemical predictive modelling based on known chemical reactions under registered conditions,
c. blending the batch with respect to the prognostic device generated recipe to exploit the effect of mutual neutralization of the unwanted components of the output gas mixture.
d. introducing the batch to the induction heated reactor, wherein the capsule with the organic raw material is inserted into the induction coil zone from below for thermo-catalytic cracking in the electromagnetic field at the negative pressure, without oxygen, at temperatures between 350°C and 1000°C, with ability to administer supplementary gas or liquids into the reactor.
e. evacuating the gas from the reactor by using the Venturi ejector which uses chilled liquid solution as a motive fluid for abrupt cooling of the gas below 100°C and stripping the gas of water-soluble components, while continuously monitoring pH and oxidation/reduction potential (ORC) of the motive solution, stripping gas of water-soluble components, introducing liquid condensate separation by density gradient,
f. scrubbing gaseous products with solid sorbents and liquid solutions in switchable sequences, mapped by prognostic analysis, depending on the need to strip off unwanted gas components
g. compressing gases up to 50 bar and separating them by means of preparative gas chromatography in chromatography columns wherein different gases and gas fractions are separated by adsorption-desorption velocity gradient while passing through tree-structured series of columns with sorbents, and wherein the outcoming gas stream is analytically controlled for establishing compound boundaries and intervals for switching between separate high-pressure gas storage vessels,
h. compressing separated gases for either their liquefaction or storage in high-pressure vessels up to 250 bar or mixing certain separated gases into the new target mixture,
i. verifying gas mixture quality by gas chromatography, or alternative analytical method of the adequate precision,
j. draining liquid products of thermolysis, which appear naturally separated by technologically divided condensation points and density gradients,
k. unloading solid residue from the reactor for analyzing solid residue for re-use in the disclosed process as either source of carbon for further gas generation, sorbent, catalyst, inhibitor, or, in case of rejection for the disclosed process, as technical powder of distinct quality for the free industrial market.
